# EUROPEAN PATENT APPLICATION

(11) **EP 4 763 387 A1**
(43) Date of publication of application: **24.06.2026**
(21) Application number: 24221191.0
(22) Date of filing: 18.12.2024
(51) Int. Cl.: B23B 51/02

(54) **DRILL TOOL**

(71) Applicant: WALTER AG, 72072 Tübingen (DE)
(72) Inventor: Schnaider, Markus, 72072 Tübingen (DE); Veit, Markus, 720 72 Tübingen (DE); Marx, Martin, 72072 Tübingen (DE)
(74) Representative: Sandvik

(57) **Abstract**

The present invention relates to a drill tool for metal cutting comprising a body with a chip flute section (1), which chip flute section (1) has a central longitudinal axis (4) extending rearward from a front end to a rear end along an axial length (5) of the chip flute section (1). The chip flute section (1) comprises a plurality of axially extending chip flutes (7), and a plurality of axially extending lands (12), which each extend rotationally behind a respective one of the plurality of chip flutes (7). Each land comprises a first margin surface (13), which is located rotationally directly behind the respective chip flute (7), and a first body clearance surface (15), which is located rotationally behind the first margin surface (13). Each land (12) further comprises a second margin surface (14), which is located rotationally behind the first body clearance surface (15), wherein the first body clearance surface (15) is wave-shaped, wherein the wave-shape is formed by in the axial direction alternating radially outer crest surfaces (22) and radially inner trough surfaces (23).

## Description

### Technical field

The present invention relates to a drill tool for metal cutting.

### Background

A wide range of components are machined from many different types of material, such as metal, composites, or combinations thereof. Accordingly, a variety of different cutting tools, and in particular drilling tools have been developed. Typically, a drilling tool comprises a drill point with cutting edges at a front end, and axially rearward extending chip flutes. Two rotationally consecutive chip flutes are separated by a land. The land comprises a margin at the rotationally leading chip flute, and a body clearance rotationally rearward of the margin, which body clearance extends to the rotationally trailing chip flute. During operation, the drill tool is rotated in a direction of rotation around a central longitudinal axis and fed only in an axial direction for drilling a hole in a workpiece. In order to achieve a strong drill tool, it is desired to have lands at a large diameter which extend over a wide arc. It is also desirable to have a large body clearance for coolant and lubricant supply to the margin. Thus, a problem with prior art drill tools is that it is necessary to make a tradeoff between strength and coolant supply.

### Summary

It is an object of the present invention to at least partly obviate the above mentioned problem. This object is achieved according to the invention by means of a drill tool according to claim 1.

A drill tool for metal cutting comprising a body with a chip flute section, which chip flute section has a front end, a rear end and a central longitudinal axis extending rearward from the front end to the rear end along an axial length of the chip flute section, wherein
- the chip flute section is rotatable around the central longitudinal axis in a direction of rotation, and wherein the central longitudinal axis defines an axial direction and a radial direction, wherein the chip flute section comprises
- a plurality of axially extending chip flutes,
- a plurality of axially extending lands, which each extend rotationally behind a respective one of the plurality of chip flutes,
   wherein each land comprises
- a first margin surface, which is located rotationally directly behind the respective chip flute,
- a first body clearance surface, which is located rotationally behind the first margin surface,
- each land further comprises a second margin surface, which is located rotationally behind the first body clearance surface, and wherein
- the first body clearance surface is wave-shaped, wherein the wave-shape is formed by in the axial direction alternating radially outer crest surfaces and radially inner trough surfaces.

Thus, the first body clearance surface is arranged between two margin surfaces and wave-shaped. The two margin surfaces are located radially outward and provide stabilizing support and strength. In addition, according to the invention, the two margin surfaces obstruct leakage of coolant/lubricant that flows along the first body clearance surface. At the radially inner trough surfaces, the inventive drill tool has increased clearance space for coolant and/or lubricant between the drill tool and a hole wall of a hole drilled by the drill tool. Thanks to wave-shape, the lands remain strong even though material is removed to form the radially inner trough surfaces that improve coolant/lubricant flow. Thus, by providing a drill tool with double margins and a wave-shaped first body clearance surface located between them, a drill tool that is both strong and ensures good coolant/lubricant supply is achieved.

The present invention relates to a drill tool for metal cutting, such as chip removing metal cutting. The drill tool comprises a body with a chip flute section. The chip flute section has a front end, a rear end and a central longitudinal axis extending rearward from the front end to the rear end along an axial length of the chip flute section. The central longitudinal axis defines an axial direction and a radial direction.

Optionally, the drill tool comprises a shaft which extends axially rearward from a rear end of the chip flute section. Preferably, the drill tool is a one-piece integral unit with the drill point and the shaft, sometimes referred to as a "solid round tool". Alternatively, the drill tool comprises an exchangeable head. which is connectable to a rear portion. The rear portion typically includes a shaft. Depending on type of drill tool, the chip flute section is comprised in the rear portion only, the exchangeable head only, or in both, wherein the suggested drill tool comprises at least the part with the chip flute section. Through the shaft, the drill tool is connectable to a machine spindle, or to an adapter for a machine spindle. The machine spindle typically is part of a machine, for example a CNC machine.

Preferably, the drill tool comprises a wear resistant material such as for example coated or non-coated cemented carbide, cermet, ceramic, CBN or steel.

The chip flute section is rotatable, for example by the machine spindle, around the central longitudinal axis in a direction of rotation. The direction of rotation is the direction that the drill tool is rotated during normal cutting operation, wherein features of the drill tool are rotationally leading or trailing relative the direction of rotation. The drill tool is typically operated with feed in the axial direction only.

The chip flute section comprises a plurality of axially extending chip flutes, for example two, three or four, wherein two are preferred. Preferably, the chip flutes are recessed in a peripheral surface of the chip flute section. The chip flute section comprises a plurality of axially extending lands, which each extend rotationally behind a respective one of the plurality of chip flutes. Preferably, each land extends between two rotationally consecutive chip flutes and borders both of them. Each land forms an intermediate portion between the two consecutive chip flutes.

Optionally, each chip flute extends in parallel with the longitudinal axis, or with an angle to the longitudinal axis, such as for example forming a helix. Optionally, the angle of the chip flutes varies or is constant along the axial length. For example, the angle decreases or increases axially rearward from the front end, wherein the angle may vary continuously or step-wise. The angle is for example 0°, i.e. the chip flute is parallel with longitudinal axis, or least 10° and at most 60°, preferably at least 20° and at most 50°. Within this range, the chip flutes provide satisfactory chip evacuation and/or chip breaking for most applications. Drill tools with helical chip flutes are sometimes referred to as "twist drills".

According to an embodiment, the drill tool comprises a drill point, which extends axially forward from the front end of the chip flute section. Optionally, the drill point is integral with the chip flute section or a separate component. The drill point has two or more cutting edges, wherein the number of cutting edges preferably corresponds to the number of chip flutes in the chip flute section. The cutting edges may be formed at the intersection of a forwardly facing axial clearance surface and a rake surface. Preferably, the chip flutes of the chip flute section extend into the drill point, wherein the rake surface is a portion of a chip flute surface that is closest to the cutting edge. Preferably, each chip flute extends axially rearward from one respective cutting edge and is configured to transport chips cut by the cutting edge axially rearward away from the cutting edge.

Preferably, the chip flute section has a maximal diameter, preferably at the front end. In an embodiment comprising a drill point, the drill point has a cutting circle with a cutting diameter, which preferably is the same as the maximal diameter of the chip flute section. Preferably, the maximal diameter is 25 mm or less.

Preferably, the maximal diameter decreases rearward, which sometimes is referred to as "back taper". Optionally, the decrease is constant, varies, or is step-wise.

The chip flute section has an axial length. For example, the axial length extends from a radially outer end of a cutting edge to a transition portion of a shaft. In this case, the axial length of the chip flute section is the entire axial length, or almost the entire axial length, of the chip flutes of the drill tool. Alternatively, the axial length of the chip flute section is a portion of the total axial length of the chip flutes of the drill tool, wherein other portions optionally have lands that differ from the inventive design of the lands in the chip flute section. Preferably, the axial length of the chip flute section is a major length of the total axial length of the chip flutes of the drill tool. For example, the axial length is 1 - 70 times the maximal diameter of the chip flute section, preferably 1 - 5 times the maximal diameter.

Each of the plurality of lands in the chip flute section comprises a first margin surface, which is located rotationally directly behind the respective chip flute. In other words, the first margin surface intersects the chip flute surface that is rotationally directly in front thereof forming a rotationally leading edge of the first margin surface. Each land further comprises a first body clearance surface, which is located rotationally behind the margin surface. A second margin surface is located rotationally behind the first body clearance surface. Preferably, the first margin surface, the second margin surface and first body clearance surface each are radially outward facing surfaces, and each extend over the total axial length of the chip flute section.

Both the first and second margin surfaces are arranged to support and guide the drill tool during operation by sliding against a hole wall of a hole to be drilled. Preferably, the margin surfaces are rounded in the circumneutral direction with a radius of curvature equal or smaller than a radius of the drill tool. Alternatively, the margin surfaces are a planar bevels with a small radial clearance angle, for example of less than 10°.

The first body clearance surface is wave-shaped, wherein the wave-shape is formed by in the axial direction alternating radially outer crest surfaces and radially inner trough surfaces. The wave-shape is achieved by arranging and configuring the crest and trough surfaces along the axial direction of the first body clearance surface. For example, a trough surface comprises a bottom, and a crest surface a ridge, wherein a distance from the trough bottom to the central longitudinal axis is shorter than a distance from the crest ridge the central longitudinal axis. The body clearance surface comprise waves having a wave height in the radial direction and a wavelength in the axial direction. The wavelength may be measured in parallel with the longitudinal axis, and the wave height along a radius.

Preferably, the body clearance surface is radially inward of the margin surfaces, wherein also radially outer crest surfaces have a clearance to a hole wall during operation.

According to an embodiment, the wave-shape is achieved by varying a radial clearance angle along the axial length of the first body clearance surface. For example, as seen in cross sections, the first body clearance surface has a radial clearance angle, which radial clearance angle varies along the axial length according to the wave-shape of the first body clearance surface, wherein the radial clearance angle has a maximum at the trough surfaces and a minimum at the crest surfaces. Preferably, an average minimum radial clearance angle is at least 27°, and an average maximum radial clearance angle is at most 45°. A smaller average radial clearance angle may cause insufficient coolant/lubricant supply. A larger average radial clearance angle may unnecessarily weaken the drill tool.

Embodiments with a varying radial clearance angle of the first body clearance surface preferably have an increasing radial distance from a bottom of a through surface to a ridge of crest surface rotationally rearward.

According to an embodiment, as seen in cross sections, the first margin surface has a first breadth, which first breadth is constant along the axial length. In the embodiment, the radial distance from a bottom of a trough surface to a ridge of a crest surface is zero at the first margin surface. A first margin surface with constant first breadth is advantageous for guiding and support of the drill tool.

The first breadth of the first margin surface may be measured in an axial cross section form the rotationally leading edge of the first margin surface to a rotationally trailing edge.

According to another embodiment, as seen in cross sections, the first body clearance surface has a radial clearance angle, which radial clearance angle is constant along the axial length. With a constant radial clearance angle, the wave-shape is achieved by arranging the trough surfaces radially deeper than the crest surfaces also at their respective rotationally forward end. According to embodiments, thereby the first breadth of the first margin surface varies. Preferably, the constant radial clearance angle is 27 - 42°, wherein the corresponding variation of the first breadth is kept in the desired range.

According to an embodiment, the first breadth varies along the axial length according to the wave-shape of the first body clearance surface, wherein the first breadth has a minimum at the trough surfaces and a maximum at the crest surfaces. Thus, the variation of the first breadth of the first margin surface is correlated with the wave-shape of the first body clearance surface. This type of wave-shape leads to a reduction in grinding time as compared to prior art tools having conventional, flat lands. Preferably, on average, the maximum of the first breadth at a crest surface is 100 - 300%, preferably, 145 - 155% of the minimum first breadth at an axially consecutive trough surface. A larger maximum breadth may cause problems with friction between the drill tool and a hole wall and heat during operation. Since a large difference between the first breadth at a crest surface and at a trough surface corresponds to deep waves of the wave-shape, a large maximum may cause too deep waves, which may negatively affect the strength or stiffness of the drill tool. Similarly, a too small difference may cause too shallow waves that are detrimental to coolant/lubricant supply.

According to an embodiment, in the axial direction, a distance from a point on a crest surface to a corresponding point on a consecutive crest surface is a wavelength; and an average of all wavelengths is 10 - 100 % of the maximal diameter of the chip flute section. A shorter wavelength may cause too massive wear of the grinding wheel during production of the drill tool, and/or a reduction in the coolant flow during operation of the drill tool. A longer wavelength may cause reduction of tool stability or stiffness. Preferably, the wave-shape is constant along the axial length of the first body clearance surface. Preferably, the wave-shape is a sinus, a zigzag, or a repetition of a parabola. This is advantageous for production and predictability of strength and stiffness of the drill tool.

Preferably, top points on each radially outer crest surface (in other words, a ridge) and bottom points on each radially inner trough surface (in other words, a bottom) extend rotationally rearward in one respective axial plane. This wave-shape is beneficial for production of drill tool since it is achievable by rotating a drill tool blank while varying the depth of a grinding wheel while moving it in the axial direction.

According to an embodiment, rotationally rearward of the respective chip flute there is a respective consecutive chip flute, wherein the second margin surface is located rotationally directly in front of a leading edge of the respective consecutive chip flute. The first and second margin surfaces constitute border surfaces of the land on one respective circumferential side and extend along the axial length. Thereby, the first and second margin surfaces are circumferentially distributed to provide optimized guidance and support. Alternatively, the second margin surface is located rotationally in front of and with a distance to the leading edge of the respective consecutive chip flute.

The first body clearance surface is located rotationally between the first margin surface and the second margin surface. According to an embodiment, the first body clearance surface extends rotationally rearward from a rotationally trailing edge of the first margin surface. Since thereby the first body clearance surface starts directly at the trailing edge of the first margin surface, the breadth of the wave-shaped first body clearance surface has been maximized rotationally forward.

According to an embodiment, the first body clearance surface extends rotationally rearward to a rotationally leading edge of the second margin surface. Thereby, the breadth of the wave-shaped first body clearance surface has been maximized rotationally rearward.

According to an embodiment, the first body clearance surface extends rotationally rearward from the trailing edge of the first margin surface to the leading edge of the second margin surface which is located rotationally directly in front of the consecutive chip flute. Therein, the entire surface of land between the first and second margin surfaces is comprised of the first body clearance surface. This allows for a short grinding time.

Alternatively, the land comprises additional surfaces, for example a surface axially beside the first body clearance surface. According to an embodiment, each land, along the axial length thereof, further comprises a second body clearance surface, wherein the second body clearance surface is located rotationally behind the first body clearance surface; the second body clearance surface is wave-shaped with features corresponding to the first body clearance surface; and the wave-shape of the second body clearance surface is different or phase-shifted relative the wave-shape of the first body clearance surface. For example, the wave-shape of the first clearance surface comprises waves with a first wavelength and a first wave height, and the wave-shape of the second clearance surface comprises waves with a second wavelength. Optionally, the wavelengths and the wave heights are both equal, but phase shifted, or one or both differ. With two body clearance surfaces, strength, stiffness and/or coolant/lubricant supply of the drill tool can be better optimized for specific operations as compared to having only the first body clearance surface.

Preferably, the second body clearance surface extends rotationally rearward directly from the trailing edge of the first body clearance surface to the leading edge of the second margin surface.

According to an embodiment, the land comprises a flat surface, for example a curved flat surface, that lacks the wave-shape. The flat surface extends axially, and rotationally behind the first body clearance surface, or rotationally behind the second margin surface, for example.

According to an embodiment, the land comprises a third or more margin surfaces. For example, in embodiments having a first and second body clearance surfaces, the first body clearance surface extends from the first margin surface at the chip flute rotationally in front thereof to a second margin surface at an intersection with the second body clearance surface. The second body clearance surface extends rotationally rearward from the second margin surface to a third margin surface at a consecutive, rotationally rearward chip flute. This embodiment provides a tool that has good guidance and support during operation.

### Brief description of the drawings

In the following, example embodiments will be described in greater detail and with reference to the accompanying drawings, in which:
Fig. 1 is a side view of a first embodiment of a drill tool according to the present invention in form of a twist drill;
Fig. 2 is a top view of the drill tool of Fig. 1;
Fig. 3 is an enlarged perspective view of a portion of a chip flute section of the first embodiment shown in Fig. 1;
Figs. 4 and 5 are cross sectional views of the drill tool according to the first embodiment, wherein Fig. 4 is at a trough surface and Fig. 5 at a crest surface as indicated in Fig. 1;
Figs. 6 and 7 are diagrams representing the wave-shape of the first and the second body clearance surface, respectively, of the drill tool according to the first embodiment;
Fig. 8 is an enlarged perspective view of a portion of a chip flute section of a second embodiment of the present invention;
Fig. 9 is an enlarged perspective view of a portion of a chip flute section of a second embodiment of the present invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

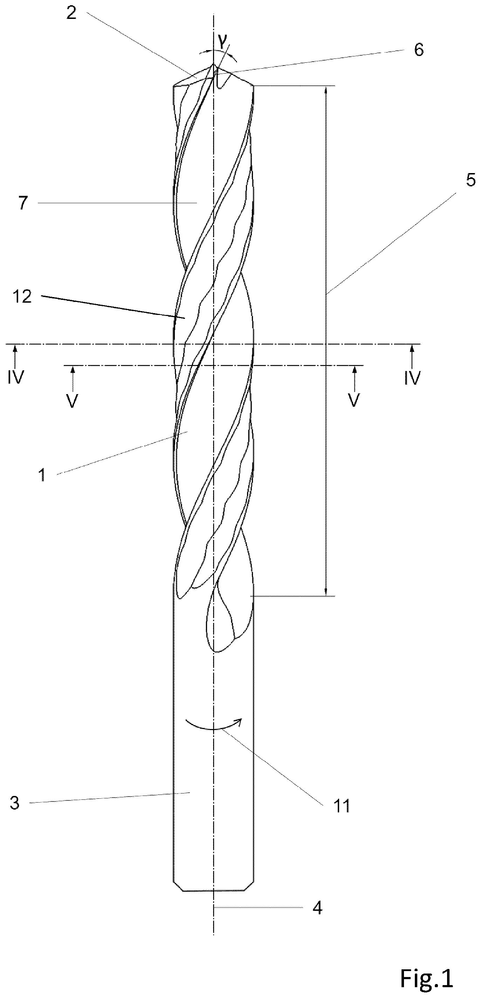

Figs. 1 - 7 show a first embodiment of the drill tool according to the present invention. The drill tool comprises a body with a chip flute section 1 with a front end, a rear end, and a central longitudinal axis 4 extending rearward from the front end to the rear end along an axial length 5 of the chip flute section 1. The chip flute section 1 comprises a plurality of axially extending chip flutes 7 and lands 12, namely two chip flutes 7 and two lands 12. Both chip flutes 7 are recessed in a peripheral surface of the chip flute section 1. Both chip flutes 7 are helical and have a helix angle γ of 30° with respect to the central longitudinal axis 4.

The drill tool of the example first embodiment further comprises a drill point 2 at a front end and a shaft 3 at a rear end. The chip flute section 1 extends rearward from a rear end of the drill point 2 to a transition portion at the front end of the shaft 3, wherein the drill point 2, the chip flute section 1 and the shaft 3 together form a one-piece, integral unit. Each chip flute 7 has a larger axial extension than the axial length 5 of the chip flute section 1, wherein each chip flute 7 extends into the drill point 2 and into the transition portion. The drill tool of the shown embodiment is a solid round tool in form of a twist drill and comprises a wear resistant material of coated cemented carbide. The drill tool is connectable to a spindle of a CNC machine by means of the shaft 3.

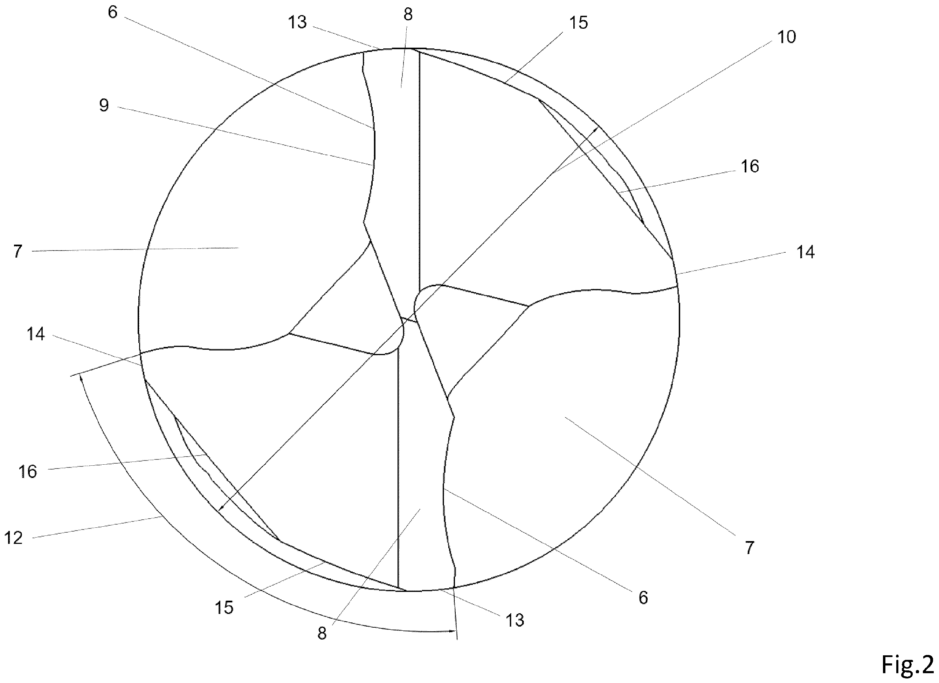

The drill point 2 comprises two cutting edges 6, which is an equal number as chip flutes 7 and lands 12 in the chip flute section 1. Both cutting edges 6 extend from a central tip of the drill point 2 radially outward and axially rearward to a respective radially outermost point of the drill tool at the front end of the chip flute section 1. The outermost points define a cutting circle with a cutting diameter 10, which is equal to a maximal diameter of the chip flute section 1, c.f. Fig. 2. In the example embodiment, the cutting diameter 10 is 8,5mm. The axial length 5 of the chip flute section 1 is 5 times the cutting diameter 10.

Each cutting edge 6 is formed at the intersection of a forwardly facing axial clearance surface 8 and a rake surface 9, wherein the rake surface 9 is a portion of a chip flute 7 surface in the drill point 2. Both chip flutes 7 extend axially rearward from one respective cutting edge 6.

The drill tool is configured to rotate around the central longitudinal axis 4 in a cutting direction 11.

In the direction of rotation, each land 12 extends between two rotationally consecutive chip flutes 7 and borders both of them, wherein each land 12 forms an intermediate portion between the two consecutive chip flutes 7. Both lands 12 follow the helix of the chip flutes 7. Both lands 12 have corresponding features, why in the following only one of the lands 12 is described.

The land 12 comprises a rotationally leading surface in form of a first margin surface 13, and a rotationally trailing surface in form of a second margin surface 14. Between the first margin surface 13 and the second margin surface 14, the land 12 has a first body clearance surface 15 and a second body clearance surface 16. The first and second margin surfaces 13, 14, and the first and second body clearance surfaces 15, 16 extend axially along the axial length 5 of the chip flute section 1 and follow the helix of the land 12.

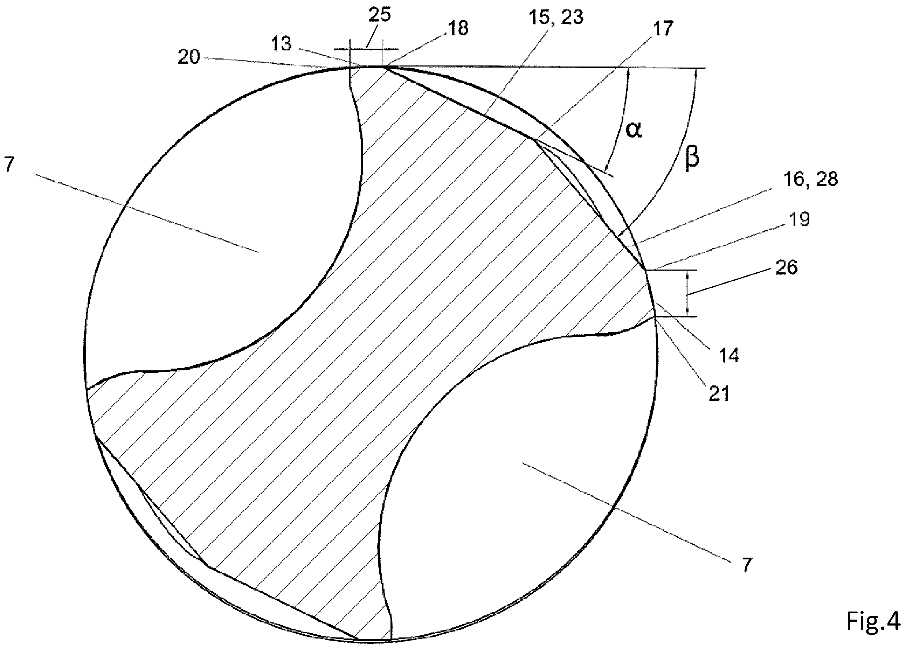

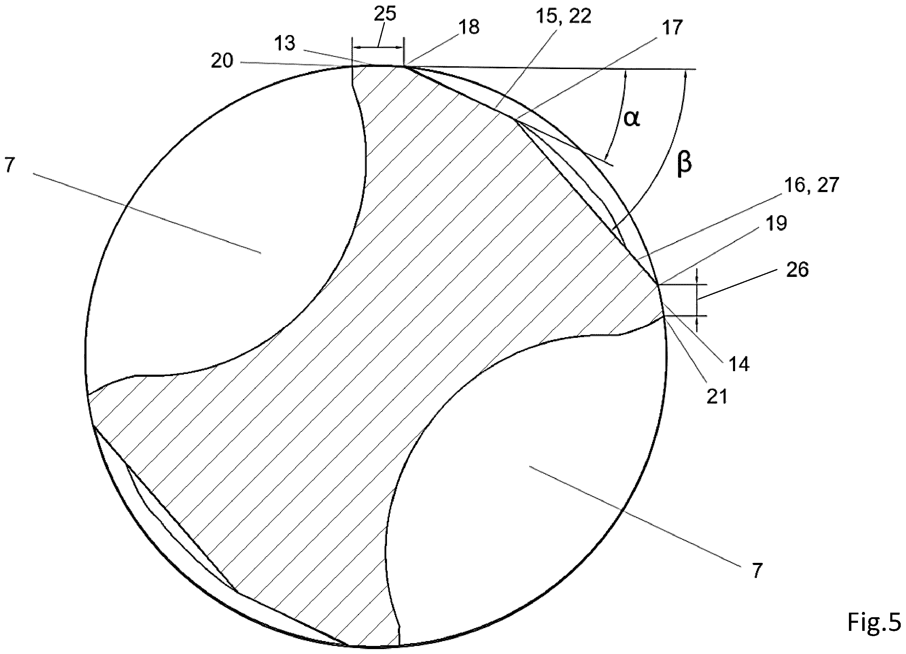

With reference to the cross sections of Fig. 4 and 5, the first margin surface 13 extends rotationally rearward directly behind the chip flute 7 that is directly in front thereof, wherein the first margin surface 13 has a leading edge 20 at an intersection with that chip flute 7. The first body clearance surface 15 extends rotationally rearward form a trailing edge 18 of the first margin surface 13.

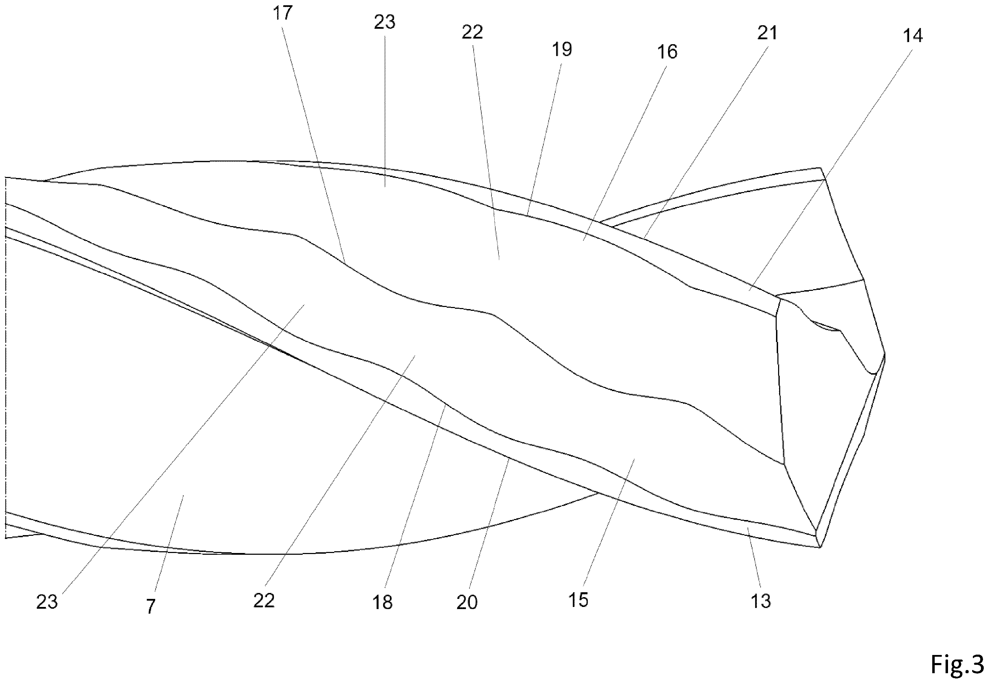

The second margin surface 14 extends rotationally forward directly in front of the chip flute 7 that is directly behind thereof, wherein the second margin surface 13 has a trailing edge 21 at an intersection with that chip flute 7. The second body clearance surface 16 extends rotationally forward form a leading edge 19 of the second margin surface 14. The first and second body clearance surfaces 15, 16 intersect along a line of intersection 17, which is located rotationally between the first and the second margin surfaces 13, 14, and axially follows the helix of the chip flute 7, c.f. Fig. 3.

As seen in the cross sections, both the first and the second margin surface 13, 14 are curved with a radius of curvature of the drill tool radius.

Both the first body clearance surface 15 and the second body clearance surface 16 comprises radially outer crest surfaces 22 and radially inner trough surfaces 23 which are alternating in the axial direction forming a wave-shape. Top points on each radially outer crest surface 22 and bottom points on each radially inner trough surface 23 extend rotationally rearward in one respective axial plane. In other words, ridges and grooves of the waves extend perpendicular to the central longitudinal axis 4. Comparing the cross section of Fig. 4 at a trough surface 23 with the cross section of Fig. 5 at a crest surface 22, it can be seen that the space between a hole wall and the first and second clearance surfaces 15, 16 is larger at through surfaces 23 than at a crest surfaces 22.

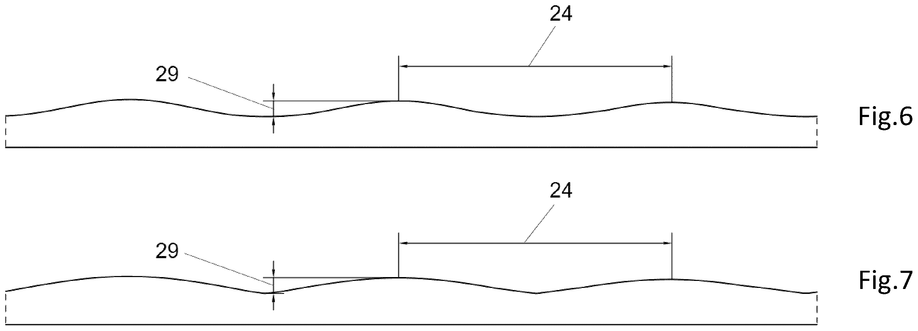

Figs. 6 - 7 are diagrams representing the wave-shape of the first body clearance surface 15 and the second body clearance surface respectively, as seen in views perpendicular to the longitudinal axis 4 in positions following the helix. A distance from a point on a ridge to a corresponding point on a consecutive bottom, is a wave height 29. A distance from a point on a crest surface to a corresponding point on a consecutive crest surface is a wavelength 24. The wave-shape of the first body clearance surface 15 is sinusoidal, and the wave-shape of the second body clearance surface is a repetition of a parabola. The waves of the wave-shaped first body clearance surface 15 and the second body clearance surface 16 are in phase with their respective ridges and bottoms at the same axial locations.

In the shown embodiment, the first body clearance surface 15 has a wavelength 24 of 4,25mm, which is 50% of the maximal cutting diameter. The second body clearance surface 16 has a wavelength 24 of 4,25 mm. Thus, both the first and the second body clearance surfaces 15, 16 have the same wavelength 24.

The first body clearance surface 15 has a radial clearance angle α, which is 30° and constant along the axial length 5. The second body clearance surface 16 has a radial clearance angle β, which is 55° and constant along the axial length 5.

The wave height 29 of the first and second body clearance surfaces 15, 16 have a correlation with a breadth of the first and second margin surfaces 13, 14, respectively. A first breadth 25 of the first body clearance surface 15 varies along the axial length 5 according to the wave-shape of the first body clearance surface 15, a second breadth 26 of the second margin surface 14 varies along the axial length 5 according to the wave-shape of the second body clearance surface 16, c.f. Figs. 3-5. The first breadth 25 has minimum where the first body clearance surface 15 has a trough surface 23, and a maximum where the first body clearance surface 15 has a crest surface 22. The second breadth 26 has minimum where the second body clearance surface 16 has a trough surface 23, and a maximum where the second body clearance surface 15 has a crest surface 22., c.f. also Figs 6 and 7. Therein, along the axial length 5, the first breadth 25 is sinusoidal and the second breadth 26 is a repetition of a parabola. In the shown embodiment, the minimum of the first breadth 25 is 0,6mm, and the maximum 0,9mm, wherein the maximum is 150% of the minimum. The minimum of the second breadth 26 is 0,6mm, and the maximum is 0,9mm. Thus, both have the same maximum and minimum values. The wave height 29 as measured along a radius of the waves of the first body clearance surface 15 is constant along the axial length 5 and 0,3mm. The wave height 29 of the of the second body clearance surface 16 is constant along the axial length 5 and 0,3mm.

The first and second margin surfaces 13, 14 have a larger radial distance to the central longitudinal axis than both the first and second body clearance surfaces 15, 16 at their respective crest surfaces 22.

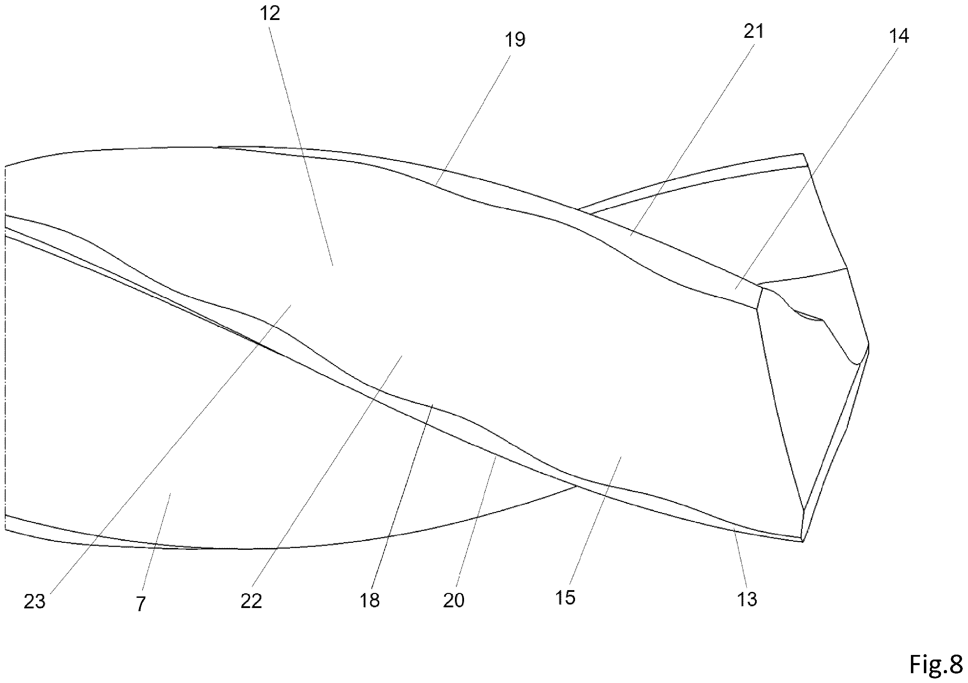

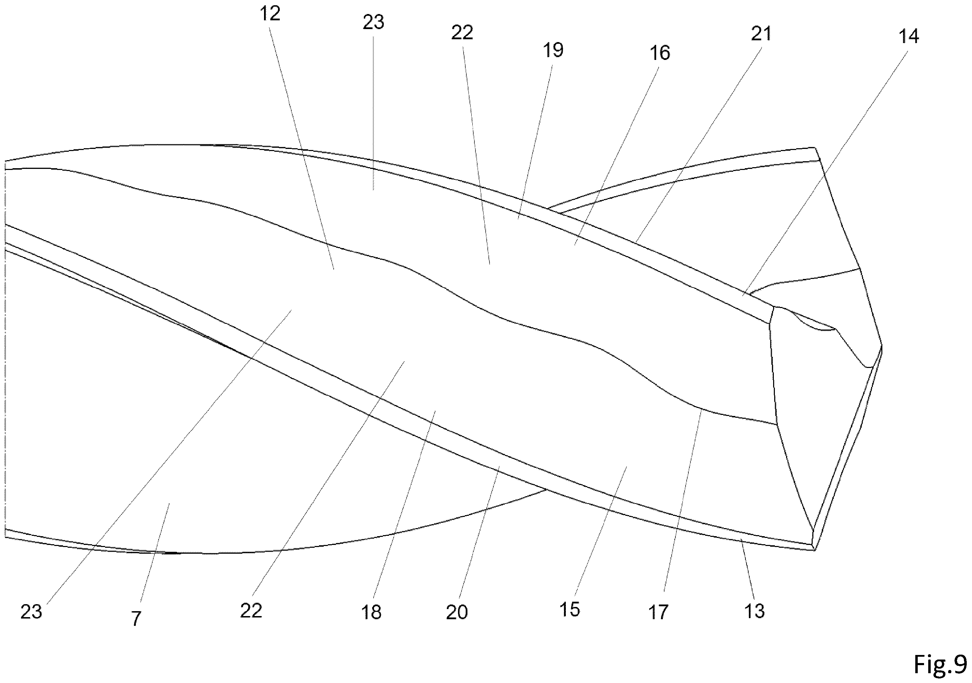

Figs. 8 and 9 show a second and a third embodiment, respectively, of the drill tool according to the present invention, which differ from the first embodiment mainly in the design of the land 12. Therefore, the second and third embodiments are described with respect to the land 12 only.

As can be seen in Fig. 8, in contrast to the first embodiment, the second embodiment of the present invention has exactly one body clearance surface, namely only the first body clearance surface 15. The first body clearance surface 15 surface extends rotationally rearward from a rotationally trailing edge 18 of the first margin surface 13 to a rotationally leading edge 19 of the second margin surface 14. The wave-shape, including wavelength 24 and wave height 29, of the first body clearance surface 15 of the second embodiment is the same as the wave-shape of the first body clearance surface 15 of the first embodiment. The first radial clearance angle α is constant along the axial length 5 in both embodiment, but different from each other. The first body clearance surface 15 of the second embodiment has a radial clearance angle α of 42°. The first and second margin surfaces 13, 14 both have the same variation in breadth 25, 26 as the first margin surface 13 in the first embodiment, including the same maximal and minimal breadth 25.

With reference to Fig. 9, the third embodiment of a drill tool according to the present invention has a first body clearance surface 15 and a second body clearance surface 16 that both extend circumferentially and axially corresponding to corresponding surfaces of the first embodiment. In contrast to the first embodiment, both body clearance surfaces 15, 16 of the third embodiment have a sinusoidal wave-shape. The sinusoidal wave-shape of the third embodiment has the same wavelength 24 as the sinusoidal wave-shape of the first body clearance surface 15 of the first embodiment. However, in the third embodiment, the wave-shape of both the first and second body clearance surfaces is formed by varying the radial clearance angles α, β. Both first and radial clearance angle α, β have a maximum of 38,5° at a respective trough surface 23. Both first and second radial clearance angle α, β have a minimum of 32° at a crest surface 22.

The wave-shape of the second body clearance surface 16 is phase shifted by half the wavelength 24 with respect to the wave-shape of the first body clearance surface. Furthermore, the first and second margin surfaces 13, 14 have a constant breadth 25, 26 along the axial length 5, which constant breadth 25, 26 is of 0,5 mm.

## Claims

1. A drill tool for metal cutting comprising a body with a chip flute section (1), which chip flute section (1) has a front end, a rear end and a central longitudinal axis (4) extending rearward from the front end to the rear end along an axial length (5) of the chip flute section (1), wherein
- the chip flute section (1) is rotatable around the central longitudinal axis (4) in a direction of rotation, and wherein the central longitudinal axis (4) defines an axial direction and a radial direction,
wherein the chip flute section (1) comprises
- a plurality of axially extending chip flutes (7),
- a plurality of axially extending lands (12), which each extend rotationally behind a respective one of the plurality of chip flutes (7),
wherein each land comprises
- a first margin surface (13), which is located rotationally directly behind the respective chip flute (7),
- a first body clearance surface (15), which is located rotationally behind the first margin surface (13),
**characterize in that**
each land (12) further comprises a second margin surface (14), which is located rotationally behind the first body clearance surface (15), wherein
the first body clearance surface (15) is wave-shaped, wherein the wave-shape is formed by in the axial direction alternating radially outer crest surfaces (22) and radially inner trough surfaces (23).

2. The drill tool according to claim 1, wherein, as seen in cross sections, the first body clearance surface (15) has a radial clearance angle α, which radial clearance angle α varies along the axial length (5) according to the wave-shape of the first body clearance surface (15), wherein the radial clearance angle α has a maximum at the trough surfaces (23) and a minimum at the crest surfaces (22).

3. The drill tool according to claim 2, wherein an average minimum radial clearance angle α is at least 27°, and an average maximum radial clearance angle α is at most 45°.

4. The drill tool according to claim 1, wherein, as seen in cross sections, the first body clearance surface (15) has a radial clearance angle α, which radial clearance angle is α constant along the axial length (5).

5. The drill tool according to any claim 1 - 4, wherein, as seen in cross sections, the first margin surface (13) has a first breadth (25), which first breadth (25) varies along the axial length (5) according to the wave-shape of the first body clearance surface (15), wherein the first breadth (25) has a minimum at the trough surfaces (23) and a maximum at the crest surfaces (22) of the first body clearance surface (15).

6. The drill tool according to claim 5, wherein, on average, the maximum of the first breadth (25) at a crest surface (22) is 100-200 %, preferably 145 - 155%, of the minimum first breadth (25) at an axially consecutive trough surface (23).

7. The drill tool according to any claim 1 - 3, as seen in cross sections, the first margin surface (13) has a first breadth (25), which first breadth (25) is constant along the axial length (5).

8. The drill tool according to any of the preceding claims, wherein
- the chip flute section (1) has a maximal diameter (10),
- in the axial direction, a distance from a point on a crest surface (22) to a corresponding point on a consecutive crest surface (22) is a wavelength (24),
- an average of all wavelengths (24) is 10 - 100 % of the maximal diameter.

9. The drill tool according to any of the preceding claims, wherein top points on each radially outer crest surface (22) and bottom points on each radially inner trough surface (23) extend rotationally rearward in one respective axial plane.

10. The drill tool according to any of the preceding claims, wherein the wave-shape of the first body clearance surface (15) is constant along the axial length (5) of the chip flute section (1).

11. The drill tool according to claim 10, wherein the wave-shape is a sinus, a zigzag, or a repetition of a parabola.

12. The drill tool according to any of the preceding claims, wherein rotationally rearward of the respective chip flute (7) there is a respective consecutive chip flute (7), wherein the second margin surface (14) is located rotationally directly in front of a leading edge of the respective consecutive chip flute (7).

13. The drill tool according to any of the preceding claims, wherein the first body clearance surface (15) extends rotationally rearward from a rotationally trailing edge (18) of the first margin surface (13).

14. The drill tool according to any of the preceding claims, wherein the first body clearance surface (15) extends rotationally forward from a rotationally leading edge (19) of the second margin surface (14).

15. The drill tool according to any of the preceding claims, wherein, along the axial length (5) of the chip flute section (1), each land further comprises a second body clearance surface (16), wherein
- the second body clearance surface (16) is located rotationally behind the first body clearance surface (15),
- the second body clearance surface (16) is wave-shaped with features corresponding to the first body clearance surface (15),
- the wave-shape of the second body clearance surface (16) is different or phase-shifted relative the wave-shape of the first body clearance surface (15).

16. The drill tool according to any of the preceding claims, wherein the body comprises a drill point (2).
